(19) **Europäisches Patentamt**

**European Patent Office**

**Office européen des brevets**

(11) **EP 0 576 944 B1**

(12) **EUROPÄISCHE PATENTSCHRIFT**

(45) Veröffentlichungstag und Bekanntmachung des Hinweises auf die Patenterteilung:
**26.02.1997 Patentblatt 1997/09**

(51) Int. Cl.$^6$: **B01J 37/02**, B01J 37/34

(21) Anmeldenummer: **93109837.0**

(22) Anmeldetag: **21.06.1993**

(54) **Schalenkatalysatoren**

Shell coated catalysts

Catalyseurs en coque

(84) Benannte Vertragsstaaten:
**BE CH DE FR GB IT LI NL**

(30) Priorität: **26.06.1992 DE 4221011**

(43) Veröffentlichungstag der Anmeldung:
**05.01.1994 Patentblatt 1994/01**

(73) Patentinhaber: **BASF Aktiengesellschaft**
**67063 Ludwigshafen (DE)**

(72) Erfinder:
• **Guenter, Lauth, Dr.**
**D-6711 Grosskarlbach (DE)**

• **Hoelderich, Wolfgang, Prof. Dr.**
**D-6710 Frankenthal (DE)**
• **Harth, Klaus, Dr.**
**D-6719 Altleiningen (DE)**
• **Hibst, Hartmut, Dr.**
**D-6905 Schriesheim (DE)**

(56) Entgegenhaltungen:
| | |
|---|---|
| **EP-A- 0 166 831** | **EP-A- 0 172 280** |
| **EP-A- 0 367 417** | **EP-A- 0 412 415** |
| **DE-A- 1 717 152** | **DE-A- 2 507 636** |

**Beschreibung**

Die vorliegende Erfindung betrifft neue Schalenkatalysatoren, hergestellt durch Abscheidung einer Legierung durch physical vapor deposition und/oder durch chemical vapor deposition auf einem Formkörper.

Es ist bekannt, daß für einige katalytische Umsetzungen, insbesondere Selektivhydrierungen z.B. von Cyclooctadien und Oxidationsreaktionen mit Sauerstoff in Gasphase z.B. Acrolein und Acrylsäure aus Propen oder Phthalsäureanhydrid aus Xylol, Katalysatoren mit Schalenstruktur besonders geeignet sind. Dabei kann die Schalendicke Aktivität und Selektivität wesentlich beeinflussen (T. Haas, Chr. Otto und J. Gaube, Dechema-Monographien, Band 113, Seite 205 bis 220 (1988)).

Eine gezielte Herstellung von Schalenkatalysatoren mit definierter Dicke ist, insbesondere mit Hilfe der gebräuchlichen Tränktechnik, kaum oder unter extrem hohem Arbeitsaufwand möglich.

Die katalytische Aktivität von Legierungen, insbesondere nach einer Vorbehandlung (Aktivierung), ist z.B. aus J. Phys. Chem., 83 (1979), S. 2009 bis 2012 bekannt. Bei bestimmten katalytischen Umsetzungen haben sich vor allem amorphe Legierungen als günstige Ausgangsmaterialien erwiesen. Diese werden entweder direkt, oder nach einer Vorbehandlung als Katalysatoren eingesetzt. (M. Shibata und T. Masumoto: "Amorphous Alloys as Catalysts or Catalyst Precursors" in "Preparation of Catalysts IV", Studies in Surface Science and Catalysis, DB. Delmon, P. Grange, P.A. Jacobs, G. Poncelet (Hrsg.), Seite 353 bis 371, 1987 Elsevier, Amsterdam). Hierbei handelt es sich um sogenannte Vollkatalysatoren.

Die Herstellung eines Katalysators aus einer Legierung, insbesondere einer amorphen Legierung, ist indes schwierig. Das Zerkleinern der üblicherweise kompakten Legierung bereitet ebenso Schwierigkeiten wie die Verformung der zerkleinerten Legierung zu einem in der Katalyse gebräuchlichen Formkörper. Ebenso ist die Herstellmethode z.B. über das Schmelzspinnverfahren recht diffizil. Auch handelt es sich hierbei immer um die Herstellung von Vollkatalysatoren.

Die Herstellung von Schalenkatalysatoren mit definierter Schalendicke aus herkömmlich hergestellten Legierungen ist nicht möglich.

Es ist bekannt, daß amorphe Legierungsschichten auch durch physikalische oder chemische Abscheidung unter Niederdruckbedingungen hergestellt werden können, in der Fachsprache als physical vapor deposition (PVD-Abscheidung) oder chemical vapor deposition (CVD-Abscheidung) bezeichnet (vgl. R.F. Bhunshah et al, "Deposition Technologies for Films and Coatings", Noyes Publications, 1982). Bekannte PVD-Verfahren sind das Aufdampfen, die Kathodenzerstäubung ("Sputtern") oder die Lichtbogenabscheidung, bekannte CVD-Verfahren umfassen die thermische CVD-Beschichtung sowie die plasmaunterstützte CVD-Beschichtung.

Es sind bereits mehrere Anwendungen von amorphen PVD/CVD-Schichten bekannt, wobei jedoch flache, in der Regel großflächige Träger mit glatten Oberflächen eingesetzt werden. So wird beispielsweise in löschbaren magnetooptischen Speicherplatten eine durch Kathodenzerstäubung hergestellte amorphe Legierungsschicht aus Seltenen Erden und Übergangsmetallen zur Informationsspeicherung verwendet (DE-A-23 42 886).

Eine weitere Anwendung betrifft die Herstellung von Dünnfilmmetall-Widerständen durch die Abscheidung feinkristalliner (Ni-Cr)-Schichten auf geeignete Keramikträger mittels Kathodenzerstäubung.

Aus Nippon Kagakukaishi, Seite 1064 bis 1069 (1985) ist die Herstellung von amorphen Nickel-Bor-Schichten durch plasmaunterstützte Abscheidung eines $B_2H_6$, Ar, $H_2$-Gemisches in Nickelreaktoren und deren katalytische Aktivität bei der Hydrierung von 1,3-Butadien bekannt.

Der vorliegenden Erfindung lag daher die Aufgabe zugrunde Schalenkatalysatoren auf einfacherem Wege herzustellen.

Demgemäß wurden neue Schalenkatalysatoren, hergestellt durch Abscheidung einer Legierung durch physical vapor deposition und/oder durch chemical vapor deposition auf einem Formkörper, gefunden, wobei die Legierung Zirkon und gegebenenfalls Legierungskomponente aus der Gruppe von Aluminium, Gallium, Silizium, Germanium, Zinn, Blei, Wismut, Yttrium, Titan, Vanadin, Niob, Tantal, Chrom, Molybdän, Wolfram, Eisen, Cobalt, Ruthenium, Rhodium, Palladium, Osmium, Iridium, Platin, Kupfer, Silber, Gold und Zink ist.

Das Aufbringen der Deckschicht auf den Grundkörper erfolgt durch physikalische oder chemische Abscheidung unter Vakuum, in der Fachsprache als physical vapor deposition (PVD) oder chemical vapor deposition (CVD) bezeichnet. Unter Vakuum ist dabei ein Druck von weniger als 10 mbar, insbesondere von weniger als 1 mbar zu verstehen. Mögliche PVD-Verfahren sind das Aufdampfen, die Kathodenzerstäubung sowie die anodische oder kathodische Lichtbogenbeschichtung. Mögliche CVD-Verfahren sind die thermische oder plasmaunterstützte Gasphasenabscheidung. Bevorzugt sind plasmaunterstützte Verfahren, wie Kathodenzerstäubung oder Arc-Beschichtung, wobei die Kathodenzerstäubung besonders bevorzugt ist.

Bei der Lichtbogenbeschichtung erfolgt der Abtrag des Beschichtungsmaterials mit einem elektrischen Lichtbogen ("Arc"), der zu einem hohen Ionisationsgrad des Beschichtungsmaterials in der Prozeßgasatmosphäre führt. Der zu beschichtende Formkörper kann mit einer in der Regel negativen Vorspannung versehen werden, welche zu einem intensiven Ionenbeschuß während der Beschichtung führt.

Bei der Kathodenzerstäubung werden die zu beschichtenden Materialien in fester Form als sog. Target auf die Kathode des Plasmasystems aufgebracht, im Vakuum (vorzugsweise $5 \times 10^{-4}$ bis $1 \times 10^{-1}$ mbar) in einer Prozeßgasatmosphäre zerstäubt und auf dem Formkörper abgeschieden. Üblicherweise enthält das Prozeßgas ein Edelgas wie Argon.

Zur Herstellung der erfindungsgemäßen Schichten sind verschiedene methodische Varianten der Kathodenzerstäubung, wie Magnetron-Sputtern, DC- bzw. RF-Sputtern, Bias-Sputtern oder reaktives Sputtern sowie deren Kombinationen geeignet. Beim Magnetron-Sputtern befindet sich das zu zerstäubende Target in einem äußeren Magnetfeld, welche das Plasma in den Bereich des Targets konzentriert und damit eine Erhöhung der Zerstäubungsrate bewirkt. Beim DC- bzw. RF-Sputtern erfolgt die Anregung des Zerstäubungsplasmas in an sich bekannter Weise durch DC-bzw. RF-Generatoren. Beim Bias-Sputtern wird der zu beschichtende Formkörper mit einer in der Regel negativen Vorspannung (Bias) belegt, welche während der Beschichtung zu einem intensiven Beschuß des Formkörpers mit Ionen führt.

Bei der reaktiven Kathodenzerstäubung ("reaktives Sputtern") werden dem Prozeßgas weitere reaktive Gase wie Wasserstoff, Kohlenwasserstoffe, Sauerstoff, Stickstoff u.a. in der gewünschten Menge zu einem geeigneten Zeitpunkt zugemischt. Hierdurch kann man durch Zerstäubung eines Metalls beispielsweise in der Gegenwart von Kohlenwasserstoffen, Sauerstoff und/oder Stickstoff im Prozeßgas direkt die betreffenden Metalloxid-, -nitrid-, -carbid-, -carbidoxid-, -carbidnitrid-, -oxidnitrid- oder -carbidoxidnitrid-Schichten abscheiden.

Die Einstellung der gewünschten Schichtdicke, chem. Zusammensetzung und Mikrostruktur erfolgt dabei wie nachfolgend beschrieben durch die Beschichtungsparameter Prozeßgasdruck, Prozeßgaszusammensetzung, Zerstäubungsleistung, Sputtermodus, Substrattemperatur und Beschichtungszeit.

PVD/CVD-Verfahren ermöglichen eine sehr reproduzierbare und durch die Beschichtungsparameter (z.B. Beschichtungsrate, Beschichtungszeit) in einfacher Weise veränderbare Einstellung der Schichtdicke. Sie kann dabei bequem zwischen wenigen Atomlagen und ca. 100 µm gewählt werden. Für Schalenkatalysatoren sind Schichtdicken im Bereich von 100 nm bis 50 µm bevorzugt, insbesondere aber 300 nm bis 20 µm und ganz besonders zwischen 0,5 µm und 10 µm.

PVD-/CVD-Technologien, insbesondere die Sputtertechnologie, bieten sehr große Freiheiten hinsichtlich der chem. Zusammensetzung der Legierungsschicht. Das Spektrum der herstellbaren Schichten reicht von zwei- über drei- oder mehrkomponentige metallische Legierungen bis hin zu oxidischen, nitridischen oder carbidischen Mischsystemen.

Die Herstellung mehrkomponentiger metallischer Legierungen erfolgt dabei üblicherweise durch Einbringen eines geeigneten Targets in die Beschichtungsanlage und durch anschließendes Zerstäuben des Targets in einem Edelgasplasma, bevorzugt in Argon. Geeignete Targets sind entweder homogene Legierungstargets, die in bekannter Weise durch Schmelzverfahren bzw. durch pulvermetallurgische Methoden hergestellt werden, oder inhomogene Mosaiktargets, die durch Zusammenfügen kleinerer Teilstücke unterschiedlicher chem. Zusammensetzung oder durch Auflegen bzw. Aufkleben von kleinen scheibenförmigen Materialstücken auf homogene Targets hergestellt werden. In alternativer Weise können metallische Legierungen dadurch hergestellt werden, daß zwei oder mehrere Targets unterschiedlicher Zusammensetzung gleichzeitig zerstäubt werden (simultanes Sputtern). Die zu beschichtenden Formkörper werden dabei so angeordnet, daß sie dem durch die Zerstäubung bewirkten Materialfluß von den verschiedenen Targets in günstiger Weise ausgesetzt werden. In einer vorteilhaften Anordnung werden die zu beschichtenden Formkörper dabei in periodischer Weise durch die simultan brennenden Zerstäubungsplasmen geführt, wobei auf die Formkörper eine Schicht aufgebracht wird, deren Zusammensetzung in der Schichttiefe periodisch moduliert. Die Modulationsperiode kann dabei durch die Sputterleistung der Einzeltargets sowie durch die Geschwindigkeit der periodischen Bewegung der Formkörper in weiten Grenzen eingestellt werden. Insbesondere ist es dabei auch möglich, durch die Einstellung einer sehr kleinen Modulationsperiode eine sehr innige Vermischung der Einzelschichten und damit die Abscheidung einer homogenen Legierung zu ermöglichen.

Die Herstellung oxidischer, nitridischer oder carbidischer Mischsysteme kann entweder durch die Zerstäubung entsprechender Oxid-, Nitrid- oder Carbid-Targets oder durch die reaktive Zerstäubung von Metalltargets in entsprechenden Reaktivgasplasmen erfolgen. Durch eine entsprechende Steuerung des Reaktivgasflusses während des reaktiven Sputterns ist es dabei auch möglich, eine partielle Oxidation, Nitrierung oder Carbierung der Legierungsschicht zu erreichen. So kann beispielsweise bei Legierungen aus edlen und unedlen Metallen durch eine geschickte Einstellung des $O_2$-Gasflusses eine selektive Oxidation der unedlen Metallkomponente erreicht werden.

Mit den genannten Abscheideverfahren ist es auch möglich, dünne Gradientenschichten herzustellen, deren Zusammensetzung mit zunehmender Schichttiefe in definierter Weise variiert wird. Die Variation der Zusammensetzung kann dabei in einfacher Weise durch die entsprechenden Beschichtungsparameter (z.B. Sputterleistung beim simultanen Sputtern, Reaktivgasfluß etc.) gesteuert werden. Darüber hinaus sind auch nicht-periodische Schichtsysteme, beispielsweise Schichtsysteme aus unterschiedlichen metallischen Legierungen oder Schichtverbunde aus metallischen und oxidischen Schichten denkbar.

Die Mikrostruktur (z.B. Phasenverteilung, Kristallitform und -größe, kristallographische Ausrichtung) sowie die Porosität der Schichten kann durch die Wahl geeigneter Abscheideparameter in weiten Grenzen gesteuert werden. So führt beispielsweise die DC-Magnetron-Kathodenzerstäubung eines metallischen Targets im Druckbereich von $4 \times 10^{-3}$ bis $8 \times 10^{-3}$ mbar zu sehr dichten und damit porenfreien Schichten, während bei einem Sputterdruck oberhalb $1 \times 10^{-}$

$^2$ mbar eine säulenförmige Morphologie mit einer zunehmenden Porosität beobachtet wird. Neben dem Sputterdruck besitzt die Substrattemperatur sowie ein eventuell angelegter Bias einen hohen Einfluß auf die Mikrostruktur.

Während mit den üblichen Methoden zur Herstellung amorpher Legierungen, die nach dem Prinzip des schnellen Abschreckens einer Schmelze arbeiten, nur Legierungszusammensetzungen in der Nähe des Eutektikums oder der Eutektika herzustellen sind, ermöglichen die erfindungsgemäßen Verfahren die Herstellung amorpher oder nanokristalliner Legierungen über einen wesentlich breiteren Kompositionsbereich. Die Abkühlrate beim Auftreffen eines durch Kathodenzerstäubung erzeugten Species (Atom, Molekül, Cluster) auf das zu beschichtende Substrat übertrifft um ein Vielfaches die Abkühlraten beim Abschrecken einer makroskopischen Schmelze. Der (thermodynamisch nicht stabile) amorphe Zustand einer Legierung kann daher bei den erfindungsgemäßen Verfahren wesentlich leichter "eingefroren" werden als bei den konventionellen Verfahren. Darüber hinaus begünstigen die bereits oben beschriebenen Möglichkeiten der Herstellung von periodischen Vielfachschichten mit modifizierter atomarer Nahordnung wesentlich die Ausbildung einer amorphen Struktur. Mit der Erfindung sind somit amorphe Legierungen zugänglich, die auf andere Weise nicht erhältlich sind.

Als Träger kommen z.B. Formkörper aus Glas, Quarzglas, Keramik, Titandioxid, Zirkondioxid, Aluminiumoxid, Aluminosilikate, Borate, Steatit, Magnesiumsilikat, Siliciumdioxid, Silicaten, Metall, Kohlenstoff z.B. Graphit oder Mischungen der genannten Materialien in Frage. Der Träger kann porös oder nicht porös sein. Als Formkörper kommen in Betracht z.B. Stränge, Tabletten, Wagenräder, Sterne, Monolithe, Kugeln, Splitt, Ringe, Extrudate. Besonders bevorzugt sind Kugeln, Tabletten und Stränge.

Um eine gleichmäßige Beschichtung der Träger zu erzielen, ist es vorteilhaft, die Träger während der Beschichtung mit geeigneten mechanischen oder strömungsmechanischen Vorrichtungen in statistischer Bewegung zu halten. Geeignete mechanische Vorrichtungen sind beispielsweise periodisch bewegte Käfige, Trommeln, Schalen oder Rinnen, in denen die Träger zu statistischen Bewegungen angeregt werden. Die mechanische Vorrichtung muß dabei natürlich geeignete Öffnungen zum Durchlaß des Beschichtungsmaterials oder zum Durchgriff eventuell benötigter Plasmen besitzen.

Die Haftung der Legierung auf dem Träger ist in der Regel sehr hoch. Sie kann bei Bedarf durch eine vor der eigentlichen Beschichtung durchzuführende Plasmaätzbehandlung des Trägers weiter gesteigert werden.

Die beschichteten Formkörper können durch eine geeignete Behandlung in ihrer katalytischen Aktivität stark erhöht werden. Diese Behandlung besteht z.B. in einer thermischen Behandlung oder in der selektiven Reaktion eines der Legierungskomponenten mit einem Gas oder Gasgemisch bei höherer Temperatur. Insbesondere die selektive Oxidation der unedleren Komponente der Legierung zu einem Oxid dieser Komponente oder die Nitrierung einer Komponente zum Nitrid dieser Komponente sei erwähnt. Die restliche Komponente oder Komponenten der Legierung liegen danach im allgemeinen in metallischer Form fein verteilt in der Oxid- bzw. Nitrid-Matrix vor. Die Kontaktfläche zwischen Nitrid bzw. Oxid und diesen metallischen Komponenten ist in der Regel sehr groß, was die katal. Aktivität und/oder Selektivität positiv beeinflussen kann. Die Sinterstabilität der metallischen Komponenten ist in der Regel sehr hoch.

Die Nachbehandlung der beschichteten Formkörper kann auch durch Behandlung mit Säuren wie HF, HCl, $HNO_3$, $H_3PO_4$, Basen wie NaOH, CrOH, $Ba(OH)_2$, $Sr(OH)_2$, KOH, RbOH oder sonstigen Reagenzien wie Sulfonsäuren oder halogenierten Kohlenwasserstoffen erfolgen, welche eine oder mehrere Komponenten der Legierung herauslösen oder mit einer oder mehreren Komponenten der Legierung reagieren oder oberflächlich behandeln.

Die spezifische Oberfläche der beschichteten Formkörper nimmt in der Regel bei der Nachbehandlung oder bei der katalytischen Reaktion zu. Die spezifische Oberfläche kann z.B. nach der gängigen weitläufig bekannten BET-Methode (Methode nach Brunauer, Emmet und Teller) bestimmt werden.

Geeignete Behandlungsverfahren sind z.B. das zur Reaktion bringen der beschichteten Formkörper mit oxidierend und/oder reduzierend wirkenden Gasen oder Gasgemischen wie z.B. Luft, Wasserstoff, Mischungen aus CO und Luft, $CO_2$ und $H_2$, $N_2$ und Wasserdampf, Luft und Wasserdampf bei Temperaturen von 100 bis 500°C. Die Reaktionsdauer kann von einigen Minuten bis zu einigen Wochen betragen. Insbesondere die Behandlung mit Mischungen aus $CO/O_2$, $H_2/CO_2$, $CO/H_2/H_2O/N_2$ führen zu einem Material mit hoher katalytischer Aktivität und einer deutlichen Erhöhung der BET-Oberfläche.

Nach der Erfindung enthält die auf die Formkörper aufgebrachte Legierungsschicht Zirkon und gegebenenfalls ein Metall aus der Gruppe von Aluminium, Gallium, Silizium, Germanium, Zinn, Blei, Wismut, Yttrium, Titan, Vanadin, Niob, Tantal, Chrom, Molyodän, Wolfram, Eisen, Cobalt, Ruthenium, Rhodium, Palladium, Osmium, Iridium, Platin, Kupfer, Silber, Gold und Zink.

Im allgemeinen enthalten die Legierungen weiterhin mindestens ein Element aus der Gruppe VIII oder IB des Periodensystems der Elemente. Besonders geeignete Legierungssysteme sind z.B. Pd-Zr, Ru-Zr, Pt-Zr, Cu-Zr, Fe-Zr, Ni-Zr, Ru-Re-Zr, Cu-Pt- Zr, Au-Zr.

Die Zusammensetzung der Legierungen ist in großen Bereichen variierbar, so kann die unedelste Komponente in der Regel von 5 bis 95 Atomprozent enthalten sein. Die aufgesputterten Legierungen sind in der Regel amorph.

Die nach dem erfindungsgemäßen Verfahren hergestellten Formkörper lassen sich verwenden für nukleophile und elektrophile Substitutionen, für Additions- und Eliminierungsreaktionen für Doppelbindungs- und Skelettisomerisierungen einschließlich Umlagerungen und für Redoxreaktionen z.B. für Alkylierungen, Isomerisierungen, Disproportionierungen, Acylierungen, Cyclisierungen, Hydratisierungen, Dehydratisierungen, Aminierungen, Hydrierungen, Dehydrierungen, Dehydrocyclisierungen, Hydroxylierungen, Oxidationen, Epoxidierungen, Skelettisomerisierungen sowie Kombinationen dieser Reaktionen, zur gezielten Umsetzung organischer Moleküle. Die nach dem erfindungsgemäßen Verfahren hergestellten Formkörper können bei Umsetzungen, wie sie beispielsweise in W. Hölderich, "Zeolites: Catalysis for the synthesis of organic compounds", Stud. Surf. Sci, Catal., 49, (1989), S. 69 bis 93, oder W. Hölderich und H. van Bekkum "Zeolites in organic Syntheses", Stud. Surf. Sci. Catal. 58 (1991) 631-727, eingesetzt werden.

Die beschichteten Formkörper lassen sich - insbesondere nach einer Aktivierung - als Schalenkatalysatoren für Hydrierungs-, Oxidations- und Isomerisierungsreaktionen, ganz besonders für Selektivhydrierungsreaktionen einsetzen.

Beispiele hierfür sind:

Selektivhydrierung von Propin, Selektivhydrierung von Butadien, Selektivhydrierung von Acetylen, Selektivhydrierung von Butinol, Selektivhydrierung von Octadien zu Octen Selektivhydrierung von Benzol zu Cyclohexen Hydrierung von Kohlenmonoxid, Hydrierung von Kohlendioxid, Hydrierung von Maleinsäureanhydrid. Hydrierung von $NO_x$ zu $NH_3$ oder $NH_2OH$ Carbonsäureamid aus Nitrilen, Amine aus Carbonsäuren Aminierung von Aromaten, insbesondere Reaktion von Benzol mit Ammoniak zu Anilin. Reduktive Aminierung von Aldehyden und Ketonen zu Aminen. Wacker-Synthese, Acetaldehyd auf Basis Ethylen. Oxidation von Butan zu Maleinsäureanhydrid. Oxidation von Kohlenmonoxid. Oxidationen von Alkoholen zu Aldehyden, Ketonen oder Carbonsäuren. Oxidationen von Alkanen zu Alkoholen, Aldehyden und Ketonen. Oxidationen von Aldehyden/Ketonen zu Carbonsäuren. Hydroxylierung von Aromaten, z.B. Oxidation von Benzol zu Phenol oder Toluol zu Kresol. Oxidationen von Propylen zu Acrolein bzw. Acrylsäure. Ammonoxidationen z.B. von Toluol mit $NH_3/O_2$ zu Benzonitril oder Propylen zu Acrylnitril. Epoxide lassen sich in Aldehyde/Ketone und unter hydrierenden Bedingungen in Alkohole umwandeln, z.B. Styroloxid-Derivate zu den entsprechenden Phenylacetaldehyden bzw. unter hydrierenden Bedingungen zu Phenylethanolen.

Beispiele

Beispiel 1

Herstellung des Katalysators I (Vergleichsbeispiel)

Eine amorphe $Pd_{33}Zr_{66}$-Legierung wird nach dem Schmelzspinn-Verfahren hergestellt. Das Material, welches in Form eines ca. 50 µm dicken Bandes vorliegt, ist röntgenamorph und besitzt keine meßbare BET-Oberfläche. Das Band wird mechanisch zerkleinert und 20 Stunden lang bei 320°C mit Wasserdampf (Partialdruck ca. 40 mbar) behandelt. Das Röntgendiffraktogramm des Materials zeigt jetzt Linien von Palladium und Zirkondioxid; seine BET-Oberfläche beträgt ca. 15 m$^2$/g. Das Material wird zu Pulver zermahlen und mit Aluminiumoxidhydroxid so gemischt, daß in der Mischung ein Palladiumgehalt von 0,25 % vorliegt. Diese Mischung wird zu Tabletten verformt und kalziniert. Für die katalytischen Reaktionen werden die Tabletten zu Splitt der Größe 1 - 1,6 mm zermahlen.

Beispiel 2

Herstellung des Katalysators II

Auf Glaskugeln mit 2 mm Durchmesser wird durch simultanes Sputtern eines Pd und eines Zr-Targets eine 1 µm dicke $Pd_{33}Zr_{66}$-Schicht aufgesputtert. Der Druck des Argongases beim Sputtern betrug 5*10-3 mbar; das Material ist röntgenamorph und besitzt keine meßbare BET-Oberfläche.

Die beschichteten Kugeln werden 20 Stunden lang bei 320°C mit Wasserdampf (Partialdruck ca. 40 mbar) behandelt. Das Röntgendiffraktogramm des Materials zeigt jetzt Linien von Palladium und Zirkondioxid; seine BET-Oberfläche beträgt ca. 0,3 m$^2$/g. Das Material besitzt einen Palladiumgehalt von 0,25 %. Das Material kann direkt in einer katalytischen Reaktion eingesetzt werden.

Beispiel 3

Katalytische Hydrierung von 2-Butin-3-ol in der Gasphase

2-Butin-3-ol wird zusammen mit einer stöchiometrischen Menge Wasserstoff bei 150°C über 5 g Katalysator geleitet. Die Belastung beträgt 2 g Butinol je g Katalysator und Stunde. Der Produktstrom wird kondensiert, in einer Vorlage gesammelt und mittels eines Gaschromatographen analysiert. Der Umsatz und die Selektivität bezüglich 2-Buten-3-ol

EP 0 576 944 B1

werden nach folgenden Formeln berechnet:

$$\text{Umsatz } \frac{[\text{2-Butin-3-ol}]\text{Edukt} - [\text{2-Butin-3-ol}]\text{Produkt}}{[\text{2-Butin-3-ol}]\text{Edukt}} \text{ x 100 \%}$$

[...] = Molprozent der Verbindung im Edukt- bzw. Produktstrum

$$\text{Selektivität 2-Buten-3-ol } \frac{[\text{2-Butin-3-ol}]\text{Produkt}}{\text{Umsatz}} \text{ x 100 \%}$$

In der nachfolgenden Tabelle sind alle katalytischen Ergebnisse zusammengefaßt. Die verwendeten Katalysatoren sind bezüglich des Palladium-Gehaltes gleich:

| Katalysator | Umsatz | Selektivität 2-Buten-3-ol |
|---|---|---|
| I (Vergleich) | 50 % | 78 % |
| II | 97 % | 84 % |
| Katalysator I ist ein Katalysator, hergestellt aus einer schmelzgesponnenen amorphen Legierung. Katalysator II ist ein aktivierter Schalenkatalysator, hergestellt aus einem besputterten Formkörper. | | |

Aus der Tabelle ist deutlich die Überlegenheit des neuartigen Schalenkatalytors, sowohl bezüglich des Umsatzes als auch bezüglich der 2-Buten-3-ol-Selektivität, zu erkennen.

Beispiel 4

Herstellung von Katalysator III

Auf Glaskugeln mit 2 mm Durchmesser wird durch simultanes Sputtern eines Cu und eines Zr-Targets eine 1 µm dicke $Cu_{70}Zr_{30}$-Schicht aufgesputtert. Der Druck des Argongases beim Sputtern betrug $5 \cdot 10^{-3}$ mbar; das Material ist röntgenamorph und besitzt keine meßbare BET-Oberfläche.

Die Kugeln werden 20 Stunden lang bei 280°C mit einer Mischung aus Wasserstoff und Kohlendioxid (molares Verhältnis 3:1, Gesamtdruck 1 bar) behandelt. Das Röntgendiffraktogramm des Materials zeigt Linien von Kupfer und Zirkondioxid; seine BET-Oberfläche beträgt ca. 0,3 $m^2$/g. Das Material besitzt einen Kupfergehalt von 0,5 %.

Das Material kann direkt in einer katalytischen Reaktion eingesetzt werden.

Beispiel 5

Herstellung weiterer Katalysatoren durch Kathodenzerstäubung

Verschiedene Träger aus geeignetem Material und geeigneter Form (vgl. nachstehende Tabelle) wurden auf ein rundes Stahlnetz (Durchmesser 150 mm) mit einer Maschenweite von 0,4 mm aufgelegt und in eine Kathodenzerstäubungsanlage eingebracht. In einem Abstand von 60 mm wurden ein oder mehrere Targets entsprechend der Tabelle eingesetzt. Die Anlage wurde mit einem zweistufigen Pumpsystem auf einen Druck von $10^{-6}$ mbar evakuiert. Danach wurde Argon bis zu einem Druck von $9 \times 10^{-3}$ mbar eingelassen. Durch Anlegen einer RF-Spannung an das Stahlnetz mit einer Leistung von 500 W wurden die Träger für die Dauer von 1 min einer Sputterätzbehandlung unterzogen. Nach Abschluß der Ätzbehandlung wurde der Ar-Druck auf einen Wert entsprechend der Tabelle eingelassen. Durch Anlegen einer geeigneten Spannung an das oder die Targets wurde auf die Träger eine Schicht abgeschieden. Beim simultanen Sputtern mehrerer Targets wurde das Stahlnetz mit den Trägern periodisch über die verschiedenen Targets geführt. In allen Fällen wurden die Träger durch eine mechanische Anregung des Stahlnetzes statistisch bewegt, um

6

eine homogene Beschichtung zu gewährleisten. Die Ergebnisse sind in der nachstehenden Tabelle zusammengestellt. Die Katalysatoren 9 bis 16 und 31 bis 36 sind nicht erfindungsgemäß.

Tabelle

| Nr. | Träger | Target 1 | Leistung 1 [W] | Target 2 | Leistung 2 [W] | Sputterdruck [mbar] | Substrat-Modus | Zusammens. [At.-%] | Schichtdicke [nm] |
|---|---|---|---|---|---|---|---|---|---|
| 1 | Glaskugeln (2 mm $\varnothing$) | $Pd_1Zr_2$ (150 mm $\varnothing$) | 500 (RF) | - | - | $5 \times 10^{-3}$ (Ar) | festst. | $Pd_{34}Zr_{66}$ | 1000 |
| 2 | Glaskugeln (2 mm $\varnothing$) | $Pd_1Zr_2$ (150 mm $\varnothing$) | 500 (RF) | - | - | $2,5 \times 10^{-2}$ (Ar) | festst. | $Pd_{34}Zr_{66}$ | 1000 |
| 3 | Glaskugeln (2 mm $\varnothing$) | $Pd_1Zr_2$ (150 mm $\varnothing$) | 500 (RF) | - | - | $5 \times 10^{-2}$ (Ar) | festst. | $Pd_{34}Zr_{66}$ | 1000 |
| 4 | Glaskugeln (2 mm $\varnothing$) | $Pd_1Zr_2$ (150 mm $\varnothing$) | 500 (RF) | - | - | $5 \times 10^{-3}$ (Ar) | festst. | $Pd_{34}Zr_{66}$ | 5000 |
| 5 | Glaskugeln (2 mm $\varnothing$) | $Pd_1Zr_2$ (150 mm $\varnothing$) | 500 (RF) | - | - | $5 \times 10^{-3}$ (Ar) | festst. | $Pd_{34}Zr_{66}$ | 10000 |
| 6 | Steatitkugeln (2 mm $\varnothing$) | $Pd_1Zr_2$ (150 mm $\varnothing$) | 500 (RF) | - | - | $2,5 \times 10^{-2}$ (Ar) | festst. | $Pd_{34}Zr_{66}$ | 1000 |
| 7 | Steatitkugeln (2 mm $\varnothing$) | $Cu_{70}Zr_{30}$ (150 mm $\varnothing$) | 500 (RF) | - | - | $2,5 \times 10^{-2}$ (Ar) | festst. | $Cu_{70}Zr_{30}$ | 1000 |
| 8 | Steatitkugeln (2 mm $\varnothing$) | $Cu_{70}Zr_{30}$ (150 mm $\varnothing$) | 500 (RF) | - | - | $2,5 \times 10^{-2}$ (Ar) | festst. | $Cu_{70}Zr_{30}$ | 5000 |
| 9 | Glaskugeln (2 mm $\varnothing$) | Pd (200 mm $\varnothing$) | 25 (RF) | - | - | $5 \times 10^{-3}$ (Ar) | festst. | Pd | 10 |
| 10 | Glaskugeln (2 mm $\varnothing$) | Pd (200 mm $\varnothing$) | 25 (RF) | - | - | $5 \times 10^{-3}$ (Ar) | festst. | Pd | 100 |
| 11 | Glaskugeln (2 mm $\varnothing$) | Pd (200 mm $\varnothing$) | 500 (RF) | - | - | $5 \times 10^{-3}$ (Ar) | festst. | Pd | 1000 |
| 12 | Glaskugeln (2 mm $\varnothing$) | Pd (200 mm $\varnothing$) | 25 (RF) | - | - | $5 \times 10^{-2}$ (Ar) | festst. | Pd | 10 |
| 13 | Glaskugeln (2 mm $\varnothing$) | Pd (200 mm $\varnothing$) | 25 (RF) | - | - | $5 \times 10^{-2}$ (Ar) | festst. | Pd | 100 |

| Nr. | Träger | Target 1 | Leistung 1 [W] | Target 2 | Leistung 2 [W] | Sputterdruck [mbar] | Substrat-Modus | Zusammens. [At.-%] | Schichtdicke [nm] |
|---|---|---|---|---|---|---|---|---|---|
| 14 | Glaskugeln (2 mm ⌀) | Pd (200 mm ⌀) | 500 (RF) | – | – | $5 \times 10^{-2}$ (Ar) | festst. | Pd | 1000 |
| 15 | Steatitkugeln (2 mm ⌀) | Pd (200 mm ⌀) | 25 (RF) | – | – | $5 \times 10^{-3}$ (Ar) | festst. | Pd | 100 |
| 16 | Steatitkugeln (2 mm ⌀) | Pd (200 mm ⌀) | 25 (RF) | – | – | $5 \times 10^{-2}$ (Ar) | festst. | Pd | 100 |
| 17 | Glaskugeln (2 mm ⌀) | Pd (200 mm ⌀) | 100 (RF) | Zr (150 mm ⌀) | 1200 (DC) | $5 \times 10^{-3}$ (Ar) | Rotation 10 U/min | $Pd_{36}Zr_{64}$ | 100 |
| 18 | Glaskugeln (2 mm ⌀) | Pd (200 mm ⌀) | 100 (RF) | Zr (150 mm ⌀) | 1200 (DC) | $5 \times 10^{-3}$ (Ar) | Rotation 10 U/min | $Pd_{36}Zr_{64}$ | 1000 |
| 19 | Glaskugeln (2 mm ⌀) | Pd (200 mm ⌀) | 100 (RF) | Zr (150 mm ⌀) | 1200 (DC) | $2,5 \times 10^{-2}$ (Ar) | Rotation 10 U/min | $Pd_{36}Zr_{64}$ | 100 |
| 20 | Glaskugeln (2 mm ⌀) | Pd (200 mm ⌀) | 100 (RF) | Zr (150 mm ⌀) | 1200 (DC) | $2,5 \times 10^{-2}$ (Ar) | Rotation 10 U/min | $Pd_{36}Zr_{64}$ | 1000 |
| 21 | Glaskugeln (2 mm ⌀) | Pd (200 mm ⌀) | 100 (RF) | Zr (150 mm ⌀) | 1200 (DC) | $5 \times 10^{-3}$ (Ar) | Rotation 20 U/min | $Pd_{36}Zr_{64}$ | 100 |
| 22 | Glaskugeln (2 mm ⌀) | Pd (200 mm ⌀) | 100 (RF) | Zr (150 mm ⌀) | 1200 (DC) | $5 \times 10^{-3}$ (Ar) | Rotation 20 U/min | $Pd_{36}Zr_{64}$ | 1000 |
| 23 | Beadgel (1,5 mm ⌀) | Pd (200 mm ⌀) | 100 (RF) | Zr (150 mm ⌀) | 1200 (DC) | $5 \times 10^{-3}$ (Ar) | Rotation 10 U/min | $Pd_{36}Zr_{64}$ | 100 |
| 24 | Beadgel (1,5 mm ⌀) | Pd (200 mm ⌀) | 100 (RF) | Zr (150 mm ⌀) | 1200 (DC) | $5 \times 10^{-3}$ (Ar) | Rotation 10 U/min | $Pd_{36}Zr_{64}$ | 1000 |
| 25 | Steatitkugeln (2 mm ⌀) | Pd (200 mm ⌀) | 100 (RF) | Zr (150 mm ⌀) | 1200 (DC) | $5 \times 10^{-3}$ (Ar) | Rotation 10 U/min | $Pd_{36}Zr_{64}$ | 100 |
| 26 | Steatitkugeln (2 mm ⌀) | Pd (200 mm ⌀) | 100 (RF) | Zr (150 mm ⌀) | 1200 (DC) | $5 \times 10^{-3}$ (Ar) | Rotation 10 U/min | $Pd_{36}Zr_{64}$ | 1000 |
| 27 | Steatitkugeln (2 mm ⌀) | Pd (200 mm ⌀) | 100 (RF) | Zr (150 mm ⌀) | 1200 (DC) | $3 \times 10^{-2}$ (Ar) | Rotation 10 U/min | $Pd_{36}Zr_{64}$ | 1000 |
| 28 | Steatitkugeln (2 mm ⌀) | Pd (200 mm ⌀) | 100 (RF) | Zr (150 mm ⌀) | 1200 (DC) | $5 \times 10^{-3}$ (Ar) | Rotation 20 U/min | $Pd_{36}Zr_{64}$ | 1000 |

| Nr. | Träger | Target 1 | Leistung 1 [W] | Target 2 | Leistung 2 [W] | Sputterdruck [mbar] | Substrat-Modus | Zusammens. [At.-%] | Schichtdicke [nm] |
|---|---|---|---|---|---|---|---|---|---|
| 29 | Glaskugeln (2 mm $\oslash$) | Pd (200 mm $\oslash$) | 200 (RF) | Zr (150 mm $\oslash$) | 1200 (DC) | $5 \times 10^{-3}$ (Ar) ($O_2$:Ar = 1:50) | Rotation 10 U/min | $(Pd_{52}Zr_{48})O_x$ | 1000 |
| 30 | Steatitkugeln (2 mm $\oslash$) | Pd (200 mm $\oslash$) | 200 (RF) | Zr (150 mm $\oslash$) | 1200 (DC) | $5 \times 10^{-3}$ (Ar) ($O_2$:Ar = 1:50) | Rotation 10 U/min | $(Pd_{52}Zr_{48})O_x$ | 1000 |
| 31 | Glaskugeln (2 mm $\oslash$) | Pd (200 mm $\oslash$) | 200 (RF) | Al (200 mm $\oslash$) | 1000 (DC) | $5 \times 10^{-3}$ (Ar) | Rotation 10 U/min | $Pd_{56}Al_{44}$ | 1000 |
| 32 | Glaskugeln (2 mm $\oslash$) | Pd (200 mm $\oslash$) | 200 (RF) | Al (200 mm $\oslash$) | 1000 (DC) | $5 \times 10^{-3}$ (Ar) ($O_2$:Ar = 1:50) | Rotation 10 U/min | $(Pd_{56}Al_{44})O_x$ | 1000 |
| 33 | Glaskugeln (2 mm $\oslash$) | Pt (200 mm $\oslash$) | 500 (RF) | – | – | $5 \times 10^{-3}$ (Ar) | festst. | Pt | 1000 |
| 34 | Glaskugeln (2 mm $\oslash$) | Pt (200 mm $\oslash$) | 500 (RF) | – | – | $1 \times 10^{-2}$ (Ar) | festst. | Pt | 1000 |
| 35 | Glaskugeln (2 mm $\oslash$) | Pt (200 mm $\oslash$) | 500 (RF) | – | – | $3 \times 10^{-2}$ (Ar) | festst. | Pt | 1000 |
| 36 | Glaskugeln (2 mm $\oslash$) | Pt (200 mm $\oslash$) | 500 (RF) | – | – | $5 \times 10^{-2}$ (Ar) | festst. | Pt | 1000 |
| 37 | Steatitkugeln (2 mm $\oslash$) | Pt (200 mm $\oslash$) | 65 (RF) | Zr (150 mm $\oslash$) | 1000 (DC) | $5 \times 10^{-3}$ (Ar) | Rotation 10 U/min | $Pt_{21}Zr_{79}$ | 100 |
| 38 | Steatitkugeln (2 mm $\oslash$) | Pt (200 mm $\oslash$) | 350 (RF) | Zr (150 mm $\oslash$) | 1000 (DC) | $5 \times 10^{-3}$ (Ar) | Rotation 10 U/min | $Pt_{54}Zr_{46}$ | 100 |
| 39 | Steatitkugeln (2 mm $\oslash$) | Pt (200 mm $\oslash$) | 350 (RF) | Zr (150 mm $\oslash$) | 1000 (DC) | $5 \times 10^{-3}$ (Ar) | Rotation 10 U/min | $Pt_{54}Zr_{46}$ | 1000 |

**Patentansprüche**

1. Schalenkatalysator, hergestellt durch Abscheidung einer Legierung durch physical vapor deposition und/oder durch chemical vapor deposition auf einem Formkörper, wobei die Legierung Zirkon und gegebenenfalls Legierungskomponenten aus der Gruppe von Aluminium, Gallium, Silizium, Germanium, Zinn, Blei, Wismut, Yttrium, Titan, Vanadin, Niob, Tantal, Chrom, Molybdän, Wolfram, Eisen, Cobalt, Ruthenium, Rhodium, Palladium, Osmium, Iridium, Platin, Kupfer, Silber, Gold und Zink enthält.

2. Schalenkatalysator nach Anspruch 1, dadurch gekennzeichnet, daß mittels des PVD- und/oder CVD-Prozesses

   a) eine homogene Schicht oder

   b) eine säulenförmige oder poröse Schicht oder

   c) eine Vielfachschicht mit unterschiedlicher chemischer Zusammensetzung der Einzelschichten oder

   d) eine Gradientenschicht mit kontinuierlich oder stufenförmig geänderter chemischer Zusammensetzung oder

   e) ein Schichtsystem aus mindestens einer metallischen und mindestens einer oxidischen, nitridischen oder carbidischen Schicht aufgebracht wird.

3. Schalenkatalysator nach einem der Ansprüche 1 bis 2, dadurch gekennzeichnet, daß die Abscheidung durch

   a) Kathodenzerstäubung eines oder mehrerer Targets in einem Edelgasplasma bei einem Druck zwischen $10^{-5}$ und 1 mbar oder durch

   b) reaktive Kathodenzerstäubung eines oder mehrerer Targets bei einem Druck zwischen $10^{-5}$ und 1 mbar in einem Plasma aus mindestens einem Edelgas und mindestens einem sauerstoff-, stickstoff- oder kohlenwasserstoffhaltigen Gas erfolgt,

   wobei die jeweiligen Targets aus reinen Metallen oder Metallegierungen oder aus Oxiden, Nitriden und Carbiden der entsprechenden Elemente bestehen und in homogener oder inhomogener Weise zusammengesetzt sind.

4. Schalenkatalysator nach einem der Ansprüche 1 bis 3, dadurch gekennzeichnet, daß das Abscheiden durch simultane Kathodenzerstäubung von Zirkon und einem oder mehreren Metallen aus der Gruppe von Aluminium, Gallium, Silizium, Germanium, Zinn, Blei, Wismut, Yttrium, Titan, Vanadin, Niob, Tantal, Chrom, Molybdän, Wolfram, Eisen, Cobalt, Ruthenium, Rhodium, Palladium, Osmium, Iridium, Platin, Kupfer, Silber, Gold und Zink erfolgt.

5. Schalenkatalysator nach einem der Ansprüche 1 bis 4, dadurch gekennzeichnet, daß eine Nachbehandlung der beschichteten Formkörper

   a) durch Kontakt mit einem oxidierend und/oder reduzierend wirkenden Gasgemisch erfolgt oder

   b) mit einer Säure, insbesondere Flußsäure oder Salzsäure, oder einer Lauge erfolgt oder

   c) durch eine thermische Behandlung erfolgt.

6. Schalenkatalysator nach einem der Ansprüche 1 bis 5, dadurch gekennzeichnet, daß die Legierung aus mindestens zwei verschiedenen Komponenten besteht, wobei die eine Komponente ein Element aus der Gruppe Palladium, Platin, Eisen, Kupfer, Nickel und Kobalt ist und die andere Komponente Zirkon und gegebenenfalls ein Element aus der Gruppe Titan, Aluminium und Silizium ist.

7. Katalysatorsystem nach einem der Ansprüche 1 bis 6, dadurch gekennzeichnet, daß es sich bei den Formkörpern um Kugeln, Tabletten oder Stränge aus Glas, Quarz, Keramik, Siliciumdioxid, Aluminiumoxid, Graphit, Metall oder Steatit handelt.

8. Katalysatorsystem nach einem der Ansprüche 1 bis 7, dadurch gekennzeichnet, daß es sich bei den Legierungen um amorphe oder nanokristalline Legierungen handelt.

**Claims**

1. A coated catalyst prepared by depositing an alloy by physical vapor deposition and/or chemical vapor deposition on a molding, wherein the alloy contains zirconium and, if appropriate, alloy components selected from the group consisting of aluminum, gallium, silicon, germanium, tin, lead, bismuth, yttrium, titanium, vanadium, niobium, tantalum, chromium, molybdenum, tungsten, iron, cobalt, ruthenium, rhodium, palladium, osmium, iridium, platinum, copper, silver, gold and zinc.

2. A coated catalyst as claimed in claim 1, wherein

   a) a homogeneous layer or
   b) a column-like or porous layer or
   c) a multiple layer having different chemical compositions of the individual layers or
   d) a gradient layer having a chemical composition changing continuously or in steps or
   e) a layer system comprising at least one metallic and at least one oxide, nitride or carbide layer is applied by means of a PVD and/or CVD process.

3. A coated catalyst as claimed in claim 1 or 2, wherein deposition is effected by

   a) sputtering of one or more targets in a noble gas plasma at from $10^{-5}$ to 1 mbar or
   b) reactive sputtering of one or more targets at from $10^{-5}$ to 1 mbar in a plasma comprising at least one noble gas and at least one oxygen-, nitrogen- or hydrocarbon-containing gas,

   the particular targets consisting of pure metals or metal alloys or oxides, nitrides and carbides of the corresponding elements and having a homogenous or inhomogeneous composition.

4. A coated catalyst as claimed in any of claims 1 to 3, wherein deposition is effected by simultaneous sputtering of zirconium and one or more metals selected from the group consisting of aluminum, gallium, silicon, germanium, tin, lead, bismuth, yttrium, titanium, vanadium, niobium, tantalum, chromium, molybdenum, tungsten, iron, cobalt, ruthenium, rhodium, palladium, osmium, iridium, platinum, copper, silver, gold and zinc.

5. A coated catalyst as claimed in any of claims 1 to 4, wherein an aftertreatment of the coated moldings is carried out

   a) by contact with an oxidizing and/or reducing gas mixture or
   b) with an acid, in particular hydrofluoric acid or hydrochloric acid, or an alkali or
   c) by a thermal treatment.

6. A coated catalyst as claimed in any of claims 1 to 5, wherein the alloy consists of at least two different components, one of the components being an element selected from the group consisting of palladium, platinum, iron, copper, nickel and cobalt and the other component being zirconium and, if appropriate, an element selected from the group consisting of titanium, aluminum and silicon.

7. A catalyst system as claimed in any of claims 1 to 6, wherein the moldings are spheres, pellets or strands of glass, quartz, ceramic, silica, alumina, graphite, metal or steatite.

8. A catalyst system as claimed in any of claims 1 to 7, wherein the alloys are amorphous or nanocrystalline alloys.

**Revendications**

1. Catalyseur à coquille, fabriqué par le dépôt d'un alliage par dépôt en phase vapeur physique et/ou par dépôt en phase vapeur chimique sur un corps moulé, où l'alliage contient du zirconium et éventuellement des composants alliants appartenant au groupe formé par l'aluminium, le gallium, le silicium, le germanium, l'étain, le plomb, le bismuth, l'yttrium, le titane, le vanadium, le niobium, le tantale, le chrome, le molybdène, le tungstène, le fer, le cobalt, le ruthénium, le rhodium, le palladium, l'osmium, l'iridium, le platine, le cuivre, l'argent, l'or et le zinc.

2. Catalyseur à coquille suivant la revendication 1, caractérisé en ce que l'on applique, par mise en oeuvre du procédé DVP et/ou DVC,

   a) une couche homogène, ou

b) une couche en forme de colonne ou poreuse, ou

c) une multicouche à composition chimique différente des couches individuelles, ou

d) une couche à gradients à composition chimique modifiée de manière continue ou échelonnée, ou

e) un système de couches constitué d'au moins une couche métallique et d'au moins une couche oxydique, nitrurique ou carburique.

3. Catalyseur à coquille suivant l'une des revendications 1 et 2, caractérisé en ce que le dépôt s'effectue par

a) pulvérisation cathodique d'une ou plusieurs cibles dans un plasma de gaz noble sous une pression comprise entre $10^{-5}$ et 1 mbar, ou par

b) pulvérisation cathodique réactive d'une ou plusieurs cibles sous une pression comprise entre $10^{-5}$ et 1 mbar dans un plasma constitué d'au moins un gaz noble et d'au moins un gaz contenant de l'oxygène, de l'azote ou un hydrocarbure,

où les cibles concernées se composent de métaux purs ou d'alliages de métaux ou d'oxydes, de nitrures et de carbures des éléments correspondants et sont constituées de manière homogène ou inhomogène.

4. Catalyseur à coquille suivant l'une quelconque des revendications 1 à 3, caractérisé en ce que le dépôt s'effectue par pulvérisation cathodique simultanée de zirconium et d'un ou plusieurs métaux appartenant au groupe formé par l'aluminium, le gallium, le silicium, le germanium, l'étain, le plomb, le bismuth, l'yttrium, le titane, le vanadium, le niobium, le tantale, le chrome, le molybdène, le tungstène, le fer, le cobalt, le ruthénium, le rhodium, le palladium, l'osmium, l'iridium, le platine, le cuivre, l'argent, l'or et le zinc.

5. Catalyseur à coquille suivant l'une quelconque des revendications 1 à 4, caractérisé en ce que l'on entreprend un traitement subséquent des corps moulés revêtus

a) par contact avec un mélange de gaz à activité oxydante et/ou réductrice, ou

b) avec un acide, plus particulièrement l'acide fluorhydrique, ou l'acide chlorhydrique, ou une lessive, ou

c) par un traitement thermique.

6. Catalyseur à coquille suivant l'une quelconque des revendications 1 à 5, caractérisé en ce que l'alliage se compose d'au moins deux composants différents, où l'un des composants est un élément appartenant au groupe formé par le palladium, le platine, le fer, le cuivre, le nickel et le cobalt et l'autre composant est constitué de zirconium et éventuellement d'un élément appartenant au groupe formé par le titane, l'aluminium et le silicium.

7. Système catalytique suivant l'une quelconque des revendications 1 à 6, caractérisé en ce qu'il s'agit, dans le cas des corps moulés, de billes, de comprimés ou pastilles, de boudins de verre, de quartz, de matière céramique, de dioxyde de silicium, d'oxyde d'aluminium, de graphite, de métal ou de stéatite.

8. Système catalytique suivant l'une quelconque des revendications 1 à 7, caractérisé en ce qu'il s'agit, dans le cas des alliages, d'alliages amorphes ou nanocristallins.